# EUROPÄISCHE PATENTANMELDUNG

(11) **EP 0 762 020 A1**
(43) Veröffentlichungstag der Anmeldung: **12.03.1997**
(21) Anmeldenummer: 96114223.9
(22) Anmeldetag: 05.09.1996
(51) Int. Cl.: F16J 15/22

(54) **Dichtschnur zur Herstellung einer dynamischen Abdichtung für Wellen und andere bewegte Maschinen- und Anlagenteile wie Schieber, Klappen, Gehäuse und andere Verbindungen**

(30) Priorität: 05.09.1995 DE 19532795
(71) Anmelder: Propack Dichtungen & Packungen GmbH, 82054 Sauerlach (DE)
(72) Erfinder: Bauer, Michael, 82054 Sauerlach (DE); Kindermann, Siegfried, 82054 Sauerlach (DE)
(74) Vertreter: Goddar, Heinz J., Dr.

(57) **Zusammenfassung**

Dichtschnur zur Herstellung einer dynamischen Abdichtung für Wellen und andere bewegte Maschinen- und Anlagenteile wie Schieber, Klappen, Gehäuse und andere Verbindungen, insbesondere bei Rührwerken, Mischern, Trocknern, Filtern und Deckeldichtungen, mit einem Kern und einer Umflechtung, dadurch gekennzeichnet, daß der Kern ein biegsames Material mit einem Hohlprofil umfaßt.

## Beschreibung

Die vorliegende Erfindung betrifft eine Dichtschnur zur Herstellung einer dynamischen Abdichtung für Wellen und andere bewegte Maschinen- und Anlagenteile wie Schieber, Klappen, Gehäuse und andere Verbindungen, insbesondere bei Ruhrwerken, Mischern, Trocknern, Filtern und Deckeldichtungen, mit einem Kern und einer Umflechtung.

Zur Abdichtung von Wellen wurden früher diagonal geflochtene Dichtschnüre aus z. B. PTFE, Aramid, Graphit, Kohle, Ramie und ählichen Materialien verwendet. Der Nachteil derartiger Dichtschnüre besteht darin, daß diese nur geringe Auslenkungen einer Welle aufnehmen können und daher die notwendige Dichtigkeit kaum erreicht wird.

Eine Verbesserung wurde dadurch erreicht, daß ein Vollmaterial als Kern mittig eingebracht und umflochten wurde. Insgesamt führten diese Maßnahmen jedoch zu noch immer unbefriedigenden Ergebnissen hinsichtlich der Dichtigkeit.

Der vorliegenden Erfindung liegt somit die Aufgabe zugrunde, eine gattungsgemäße Dichtschnur zu liefern, mit der sowohl bei Überdruck- als auch bei Vakuum-Anwendungen ein Eindringen von Medien zwischen einer Welle und einer Dichtschnur ausgeschlossen wird.

Erfindungsgemäß wird diese Aufgabe dadurch gelöst, daß der Kern ein biegsames Material mit einem Hohlprofil umfaßt.

Dabei kann vorgesehen sein, daß das Hohlprofil einen im wesentlichen runden Querschnitt aufweist.

Andererseits kann auch vorgesehen sein, daß das Hohlprofil einen im wesentlichen ovalen Querschnitt aufweist.

Wiederum kann auch vorgesehen sein, daß das Hohlprofil einen im wesentlichen eckigen Querschnitt aufweist.

Günstigerweise umfaßt das Kernmaterial mindestens einen elastomeren Werkstoff.

Vorteilhafterweise ist der Werkstoff aus der Gruppe der Silicone, EPDM, Vitone, Polyethylene, Polypropylene und Polytetrafluorethylene ausgewählt.

Günstigerweise weist das Kernmaterial eine Härte im Bereich von etwa 40 bis 80 Shore auf.

In einer besonderen Ausführungsform der Erfindung kann vorgesehen sein, daß die Umflechtung einen im wesentlichen quadratischen Querschnitt aufweist.

Dabei kann vorgesehen sein, daß der größte Querschnittsdurchmesser des Kernmaterials im Bereich von 30 bis 90 % der Kantenlänge der Dichtschnur liegt.

In einer weiteren besonderen Ausführungsform kann vorgesehen sein, daß das biegsame Material ein Federelement umfaßt.

Schließlich kann dabei vorgesehen sein, daß das Federelement eine Spiralfeder umfaßt.

Der Erfindung liegt die überraschende Erkenntnis zugrunde, daß durch die hohlprofilartige Gestalt des Kerns z.B. ein größerer Wellenschlag aufgenommen werden kann und eine verbesserte Rückfederung der Dichtschnur im entlasteten Zustand erzielbar ist. Damit ist ein Eindringen von Medien zwischen z.B. einer Welle und einer Dichtschnur ausgeschlossen.
Weitere Merkmale und Vorteile der Erfindung ergeben sich aus den Ansprüchen und aus der nachstehenden Beschreibung, in der ein Ausführungsbeispiel anhand der schematischen Zeichnung im einzelnen erläutert ist. Dabei zeigt:
- Fig. 1: eine Querschnittsansicht von einer Dichtschnur gemäß der vorliegenden Erfindung; und
- Fig. 2: eine Anordnung der Dichtschnur von Fig. 1 zur Herstellung einer dynamischen Abdichtung.

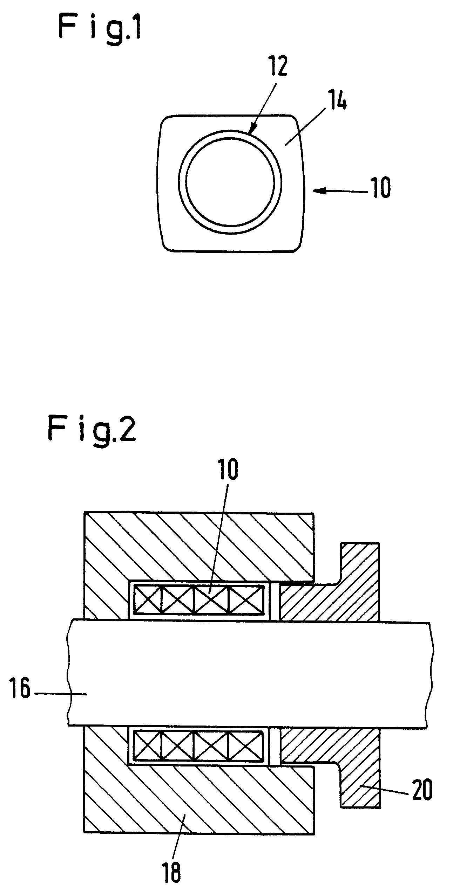

Bezugnehmend auf Figur 1 wird dort eine Dichtschnur 10 gemäß der vorliegenden Erfindung im Schnitt gezeigt. Ein mittig angeordneter Kern 12 umfaßt ein kreisrundes Hohlprofil aus einem elastomeren Werkstoff, wodurch der Kern Schlaucheigenschaften aufweist. Der Kern 12 ist von einer Umflechtung 14 umgeben, deren äußere Kontur im wesentlichen quadratisch ist. Für die Umflechtung 14 können alle handelsüblichen in der Industrie eingesetzten Materialien verwendet werden. Die Auswahl von Kernmaterial und Umflechtungsmaterial hängt von dem jeweiligen spezifischen Einsatz ab und muß darauf ausgerichtet werden. Durch das verbesserte Rückstellverhalten einer Dichtschnur mit "Schlaucheinlage" wird eine optimale Abdichtung erreicht.

Figur 2 zeigt eine Anordnung der erfindungsgemäßen Dichtschnur 10 zur Herstellung einer dynamischen Abdichtung einer Welle 16. Die Welle 16 erstreckt sich durch eine Stopfbuchse, die ein Stopfbuchsgehäuse 18 und eine Stopfbuchsbrille 20 umfaßt. Die Dichtschnur 10 befindet sich in Form von Packungsringen um die Welle 16 zwischen dem Stopfbuchsgehäuse 18 und der Stopfbuchsbrille 20, auf die ein Anpreßdruck ausgeübt wird. In der Schnittansicht sind Einzelheiten der Dichtschnur 10 weggelassen.

Die erfindungsgemäße Dichtschnur zur Herstellung einer dynamischen Abdichtung kann auch bei z.B. Spindeln oder Achsen verwendet werden.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

### BEZUGSZEICHENLISTE

- 10: Dichtschnur
- 12: Kern
- 14: Umflechtung
- 16: Welle
- 18: Stopfbuchsgehäuse
- 20: Stopfbuchsbrille

## Patentansprüche

1. Dichtschnur zur Herstellung einer dynamischen Abdichtung für Wellen und andere bewegte Maschinen- und Anlagenteile wie Schieber, Klappen, Gehäuse und andere Verbindungen, insbesondere bei Rührwerken, Mischern, Trocknern, Filtern und Deckeldichtungen, mit einem Kern und einer Umflechtung, dadurch gekennzeichnet, daß der Kern (12) ein biegsames Material mit einem Hohlprofil umfaßt.

2. Dichtschnur nach Anspruch 1, dadurch gekennzeichnet, daß das Hohlprofil einen i.w. runden Querschnitt aufweist.

3. Dichtschnur nach Anspruch 1, dadurch gekennzeichnet, daß das Hohlprofil einen i.w. ovalen Querschnitt aufweist.

4. Dichtschnur nach Anspruch 1, dadurch gekennzeichnet, daß das Hohlprofil einen i.w. eckigen Querschnitt aufweist.

5. Dichtschnur nach einem der vorangehenden Ansprüche, dadurch gekennzeichnet, daß das Kernmaterial mindestens einen elastomeren Werkstoff umfaßt.

6. Dichtschnur nach Anspruch 5, dadurch gekennzeichnet, daß der Werkstoff aus der Gruppe der Silicone, EPDM, Vitone, Polyethylene, Polypropylene und Polytetrafluorethylen ausgewählt ist.

7. Dichtschnur nach einem der vorangehenden Ansprüche, dadurch gekennzeichnet, daß das Kernmaterial eine Härte im Bereich von etwa 40 bis 80 Shore aufweist.

8. Dichtschnur nach einem der vorangehenden Ansprüche, dadurch gekennzeichnet, daß die Umflechtung (14) einen i.w. quadratischen Querschnitt aufweist.

9. Dichtschnur nach Anspruch 8, dadurch gekennzeichnet, daß der größte Querschnittsdurchmesser des Kernmaterials im Bereich von 30 bis 90 % der Kantenlänge der Dichtschnur (10) liegt.

10. Dichtschnur nach einem der Ansprüche 1 bis 3 und 8 und 9, dadurch gekennzeichnet, daß das biegsame Material ein Federelement umfaßt.

11. Dichtschnur nach Anspruch 10, dadurch gekennzeichnet, daß das Federelement eine Spiralfeder umfaßt.
